# EUROPÄISCHE PATENTSCHRIFT

(11) **EP 3 773 980 B1**
(45) Veröffentlichungstag und Bekanntmachung des Hinweises auf die Patenterteilung: **27.07.2022**
(21) Anmeldenummer: 19714643.4
(22) Anmeldetag: 29.03.2019
(51) Int. Cl.: B01D 35/147, B01D 35/153, B01D 35/16, B01D 29/21, B01D 29/96

(54) **FILTERELEMENT UND FILTERANORDNUNG**
FILTER ELEMENT AND FILTER ASSEMBLY
ÉLÉMENT FILTRANT ET DISPOSITIF DE FILTRATION

(30) Priorität: 29.03.2018 DE 102018002623
(43) Veröffentlichungstag der Anmeldung: 17.02.2021
(73) Patentinhaber: MANN+HUMMEL GmbH, 71636 Ludwigsburg (DE)
(72) Erfinder: BAUMANN, Christoph, Kalamazoo, Michigan 49006 (US); GLÜCK, Oliver, 70499 Stuttgart (DE); JOKSCHAS, Günter, 71540 Murrhardt (DE); RAZGANI, Idriss, Tanger, 90060 (MA); TALMON-GROS, Dietmar, 71720 Oberstenfeld (DE); WEINDORF, Martin, 70806 Kornwestheim (DE)
(74) Vertreter: Mann + Hummel Intellectual Property
(86) Internationale Anmeldenummer: PCT/EP2019/057975
(87) Internationale Veröffentlichungsnummer: WO 2019/185857

(56) Entgegenhaltungen:
- DE-A1- 19 848 978
- DE-A1- 19 951 085
- DE-A1-102012 210 900
- DE-A1-102013 202 449

## Beschreibung

### Technisches Gebiet

Die vorliegende Erfindung betrifft ein Filterelement und eine Filteranordnung mit einem derartigen Filterelement.

### Stand der Technik

Eine Ölfilteranordnung umfasst einen Ölfilter, der innerhalb eines Filtergehäuses aufgenommen ist. Das Filtergehäuse wiederum weist einen beispielsweise fest an einer Tragstruktur eines Fahrzeugs befestigen Filtergehäusetopf und einen auf den Filtergehäusetopf aufgeschraubten Filtergehäusedeckel auf. Insbesondere bei der Anwendung derartiger Ölfilteranordnungen bei Lastkraftwagen ergeben sich sehr große Abmessungen des Ölfilters. Es ist daher für einen Benutzer schwierig, den Ölfilter auszuwechseln. Daher kann der Ölfilter mit Hilfe von Mitnahmekonturen mit dem Filtergehäusedeckel gekoppelt werden, so dass der Ölfilter bei einem Abnehmen des Filtergehäusedeckels von dem Filtergehäusetopf aus diesem herausgezogen wird.

DE 10 2015 208 426 A1 zeigt eine Filteranordnung mit einem Filterelement, dass mehrere in einen Innenraum desselben hineinragende Bajonettflügel umfasst. Diese Bajonettflügel treten in Wechselwirkungen mit an einem Filtergehäusedeckel vorgesehenen korrespondierenden Bajonettflügeln. Dabei sind sowohl alle Bajonettflügel an dem Filterelement als auch alle Bajonettflügel an dem Filtergehäusedeckel bezüglich einer Längsrichtung des Filterelements jeweils auf derselben Höhe angeordnet.

DE 10 2017 005 619 A1 beschreibt eine Filteranordnung mit einem Filterelement das in einem Filtergehäuse aufgenommen ist. Das Filterelement ist mit Hilfe eines Umgehungsventilgehäuses mit einem Filtergehäusedeckel gekoppelt. Das Umgehungsventilgehäuse umfasst dazu Mitnahmekonturen, die in korrespondierenden Mitnahmekonturen des Filterelements eingreifen. Dabei sind sowohl die Mitnahmekonturen an dem Umgehungsventilgehäuse als auch die Mitnahmekonturen an dem Filterelement bezüglich einer Längsrichtung des Filterelements jeweils auf derselben Höhe angeordnet.

DE 10 2012 210 900 beschreibt ein Ringfilterelement mit Koppelelementen am oberen Ende des Stützkörpers, um das Herausziehen des Filterelements aus dem Filtergehäuse mit dem Deckel zu ermöglichen.

### Offenbarung der Erfindung

Es ist daher Aufgabe der Erfindung, ein verbessertes Filterelement zur Verfügung zu stellen.

Demgemäß wird ein Filterelement, insbesondere ein Ölfilterelement, mit einer ersten Zugfläche, die dazu eigerichtet ist, mit einer korrespondierenden ersten Gegenfläche eines Filtergehäuses des Filterelements zusammenzuwirken, und einer zweiten Zugfläche, die dazu eingerichtet ist, mit einer korrespondierenden zweiten Gegenfläche des Filtergehäuses zusammenzuwirken, vorgeschlagen.

Das Filterelement weist einen Filtermediumkörper auf, der einen Innenraum zumindest teilumfänglich umgibt.

Die Zugflächen und die Gegenflächen sind dazu eingerichtet, derart zusammenzuwirken, dass das Filterelement mit Hilfe derselben aus dem Filtergehäuse herausziehbar ist, wobei die erste Zugfläche und die zweite Zugfläche entlang einer Längsrichtung des Filterelements voneinander beabstandet angeordnet sind. Das erfindungsgemäße Filterelement kann auch mehr als zwei Zugflächen aufweisen; es ist lediglich essentiell, dass zumindest zwei Zugflächen vorgesehen sind, die in der Längsrichtung beabstandet sind. Die weiteren Zugflächen können jedoch auch in Längsrichtung nicht beabstandet sein. In einer bevorzugten Ausführungsform mit mehr als zwei Zugflächen sind jedoch alle Zugflächen zueinander längsaxial versetzt.

Das Filterelement weist erfindungsgemäß ferner ein erstes Mitnahmeelement auf, das die erste Zugfläche aufweist, und ein zweites Mitnahmeelement, das die zweite Zugfläche aufweist, wobei die erste Zugfläche und die zweite Zugfläche in den von dem Filtermediumkörper zumindest teilumfänglich umgebenen Innenraum des Filterelements radial hineinragen.

Ferner weisen das erste Mitnahmeelement und/oder das zweite Mitnahmeelement eine Anschlagfläche auf, die umfänglich an die Zugflächen des ersten und/oder zweiten Mitnahmeelements angrenzend vorliegt und die dazu eingerichtet ist, in einer Benutzungsanordnung mit einer korrespondierenden Gegenanschlagfläche des Filtergehäuses zur Ausbildung einer zumindest einseitig wirksamen, gegenüber dem Filtergehäuse relativen Drehfreiheitsgradhemmung um die Längsachse zusammenzuwirken. Die Gegenanschlagfläche kann insbesondere an zumindest einem Mitnahmegegenelement des Filtergehäuses, an dem bevorzugt auch die Gegenflächen vorliegen, angeordnet sein. Insbesondere kann die Gegenanschlagfläche durch eine zumindest teilweise mit einer Radialkomponente verlaufende Fläche des Mitnahmegegenelements gebildet werden, sodass durch relatives Verdrehen des Filterelements gegenüber dem Filtergehäuseteil die filterelementseitige Anschlagfläche an der filtergehäuseseitigen Gegenanschlagfläche zur Anlage kommt. Durch die unmittelbar aneinander angrenzende Anordnung der Zugflächen und Anschlagflächen sowie deren relative Winkelstellungen wird bevorzugt seitens des Filterelements zumindest ein im Wesentlichen L-förmiger innenliegender Bajonetthaken ausgebildet, bevorzugt über den Innenumfang verteilt eine Mehrzahl von L-förmigen Bajonetthaken.

Das Filterelement umfasst bevorzugt eine Rohseite und eine Reinseite. Das zu reinigende Fluid strömt von der Rohseite durch das Filtermedium des Filtermediumkörpers hindurch auf die Reinseite. Die Reinseite ist dabei bevorzugt dem Innenraum des Filterelements zugeordnet (Durchströmung von außen nach innen). Es werden jedoch auch Ausführungen von der vorliegenden Erfindung erfasst, bei denen die Rohseite in dem Innenraum vorliegt (Durchströmung von innen nach außen). Darunter, dass die erste Zugfläche und die zweite Zugfläche "radial" in den Innenraum hineinragen, ist zu verstehen, dass die erste Zugfläche und die zweite Zugfläche sich in Richtung auf die Symmetrieachse zu erstrecken.

Das Filterelement ist insbesondere dazu eingerichtet, Fluide, wie beispielsweise Luft oder andere Gase, Flüssigkeiten, insbesondere flüssige Betriebsmittel eines Fahrzeuges, insbesondere eines Kraftfahrzeuges wie Öl, Wasser, Benzin, Kerosin oder Harnstofflösung, zu filtern. Insbesondere ist das Filterelement ein Ölfilterelement für einen Lastkraftwagen, eine landwirtschaftliche Maschine oder eine Baumaschine. Das Filterelement ist insbesondere dazu eingerichtet, Verunreinigungen, insbesondere Partikel und Schwebstoffe, aus Öl abzutrennen. Das Filterelement kann Anwendung in Kraftfahrzeugen, Wasserfahrzeugen, Schienenfahrzeugen, landwirtschaftlichen Fahrzeugen, Baumaschinen, Luftfahrzeugen oder dergleichen finden. Ferner kann das Filterelement auch bei stationären Anwendungen, wie beispielsweise in der Gebäudetechnik, eingesetzt werden.

Mit "radial einragen" ist hierin insbesondere "mit zumindest einer Radialkomponente" gemeint und das Verständnis nicht auf eine Radialrichtung im strengen Sinne beschränkt, auch wenn dies bevorzugt wird, sodass auch Ausführungen von diesem Merkmal umfasst werden, bei denen die Erstreckungsrichtung der Zugflächen eben nicht streng radial ist, sondern die einer Sekantenrichtung entspricht.

Gemäß einer bevorzugten Ausführungsform umgibt der Filtermediumkörper den Innenraum vollumfänglich.

Mit "einseitig" wird hierin bezüglich der Drehfreiheitsgradhemmung eine Hemmung eines relativen Drehfreiheitsgrades in einer Rotationsrichtung bezeichnet. Die vorbeschriebene Drehfreiheitsgradhemmung ist insbesondere ausschließlich einseitig wirksam, um ein "Einfangen" des Filterelements durch das Filtergehäusebauteil, insbesondere beim Aufschrauben eines Gehäusedeckels, zu ermöglichen, d. h. die Zugflächen und die Gegenflächen mit einander in Funktionskontakt zu bringen.

Senkrecht bzw. normal bedeutet insbesondere unter einem rechten Winkel.

In einer besonderen Ausführungsform kann vorgesehen sein, dass die Anschlagfläche im Wesentlichen normal zu der Zugfläche ausgerichtet ist und/oder bevorzugt im Wesentlichen parallel zu einer Längsachse des Filterelements radial in den Innenraum einragt. Durch diese Ausrichtung der Anschlagfläche wird eine besonders wirksame relative Drehfreiheitsgradhemmung durch formschlüssigen Funktionskontakt erreicht.

In einer bevorzugten Ausführungsform ist jeder der Zugflächen eine eigene Anschlagfläche zugeordnet.

Das Filterelement ist insbesondere im Wesentlichen rotationssymmetrisch zu einer Mittel- oder Symmetrieachse aufgebaut. Die Längsrichtung ist dabei parallel oder entlang der Symmetrieachse orientiert. Bevorzugt umfasst das Filterelement eine erste Endscheibe und eine zweite Endscheibe, zwischen denen ein gefaltetes Filtermedium angeordnet ist; das Filtermedium muss jedoch nicht zwingend gefaltet sein. Die erste Endscheibe und die zweite Endscheibe können mit dem Filtermedium verklebt, vergossen, verschmolzen oder verschweißt sein. Insbesondere sind die erste Endscheibe und die zweite Endscheibe jeweils stirnseitig an dem Filtermedium vorgesehen. Die erste Endscheibe und/ oder die zweite Endscheibe können beispielsweise aus einem Metallwerkstoff, insbesondere aus einem Metallblech, gefertigt sein. Alternativ können die erste Endscheibe und die zweite Endscheibe auch aus einem Kunststoffmaterial und/oder aus einem Schaummaterial, insbesondere einem thermisch aufschäumbaren Material, gefertigt sein. Die Längsrichtung kann dabei von der zweiten Endscheibe in Richtung der ersten Endscheibe oder umgekehrt orientiert sein.

Bevorzugt weist die erste Zugfläche einen vorbestimmten Abstand zu einer Endscheibe, insbesondere zu der ersten Endscheibe, und die zweite Zugfläche weist einen vorbestimmten Abstand zu der entsprechenden Endscheibe auf, wobei der Abstand der zweiten Zugfläche von der Endscheibe größer ist als der Abstand der ersten Zugfläche von der Endscheibe. Die beiden Zugflächen sind somit um einen vorbestimmten Abstand voneinander beabstandet positioniert, wobei dieser Abstand sich aus dem Betrag der Differenz der zuvor erwähnten Abstände der Zugflächen zu der jeweiligen Endscheibe ergibt. Insbesondere ist die erste Zugfläche getrennt von der zweiten Zugfläche angeordnet. Das heißt, die erste Zugfläche stimmt nicht mit der zweiten Zugfläche überein. Die Zugflächen und die Gegenflächen können Teil eines Bajonettverschlusses sein.

Bevorzugt sind das Filterelement und das Filtergehäuse Teil einer Filteranordnung, insbesondere einer Ölfilteranordnung. Die Filteranordnung umfasst bevorzugt einen Filtergehäusedeckel, an den das Filterelement zum Herausziehen desselben aus einem Filtergehäusetopf des Filtergehäuses koppelbar ist. Das heißt, das Filterelement kann mit Hilfe des Filtergehäusedeckels aus dem Filtergehäusetopf herausgezogen werden. Der Filtergehäusedeckel kann die Gegenflächen umfassen. Insbesondere können die Gegenflächen an einer Mitnahmeeinrichtung, die mit dem Filtergehäusedeckel gekoppelt ist, vorgesehen sein.

Aufgrund der Tatsache, dass die erste Zugfläche und die zweite Zugfläche entlang der Längsrichtung voneinander beabstandet angeordnet sind, lässt sich ein Schlüssel-Schloss-System verwirklichen, wodurch nicht geeignete Filterelemente nicht in dem Filtergehäuse montierbar und insbesondere nicht wieder aus diesem demontierbar sind. Insbesondere kann ein sogenanntes fehlervermeidendes Poka Yoke-Prinzip verwirklicht werden. Eine Fehlmontage des Filterelements, beispielsweise im Servicefall, wird so zuverlässig verhindert.

In Ausführungsformen bilden die erste Zugfläche und die zweite Zugfläche jeweils eine Ebene, die jeweils senkrecht zu der Längsrichtung orientiert ist. Das heißt, die erste Zugfläche und die zweite Zugfläche sind jeweils nicht gekrümmt oder gewölbt und auch bevorzugt bezüglich der Längsrichtung nicht geneigt. Die erste Zugfläche und die zweite Zugfläche bilden somit jeweils bevorzugt eine ebene Geometrie aus

In Ausführungsformen umfasst das Filterelement ferner ein Stützrohr, an dem die erste Zugfläche und die zweite Zugfläche vorgesehen sind. Die erste Zugfläche und die zweite Zugfläche können alternativ auch an einer der Endscheiben vorgesehen sein. Das Stützrohr ist vorzugsweise innerhalb des Filtermediums angeordnet und stützt dieses innenseitig ab. Jeweils stirnseitig an dem Stützrohr sind die erste Endscheibe und die zweite Endscheibe vorgesehen. Dabei können die erste Endscheibe, die zweite Endscheibe und das Stützrohr eine Stützstruktur des Filterelements bilden. Die Stützstruktur kann einteilig, insbesondere materialeinstückig, ausgebildet sein. Beispielsweise ist die Stützstruktur ein Kunststoffspritzgussbauteil. Alternativ kann die Stützstruktur auch ein Metall oder eine Metalllegierung aufweisen oder daraus bestehen. Das Stützrohr ist gitterförmig und fluiddurchlässig. Alternativ kann das Filterelement eine Endscheibe aufweisen, die an einer ersten Längsstirnfläche des Filterelements vorliegt, wobei die Endscheibe bevorzugt einen Bundhülsenabschnitt aufweist, der sich zumindest entlang eines Längsachsenabschnitts in den Innenraum erstreckt, und wobei bevorzugt die erste Zugfläche und die zweite Zugfläche an dem Bundhülsenabschnitt vorliegen. Eine derartige Ausführungsform eignet sich grundsätzlich auch für mittelrohrfreie Filterelemente. Bei der Endscheibe kann es sich bspw. um eine Kunststoffendscheibe handeln, die etwa mit dem Filtermedium verschweißt sein kann.

Vorzugsweise sind das erste Mitnahmeelement und das zweite Mitnahmeelement an dem Stützrohr vorgesehen. Alternativ können die Mitnahmeelemente auch an einer der Endscheiben vorgesehen sein. Insbesondere erstrecken sich das erste Mitnahmeelement und das zweite Mitnahmeelement radial in den Innenraum des Filterelements hinein. Die Mitnahmeelemente sind bevorzugt Teil des zuvor erwähnten Bajonettverschlusses.

In Ausführungsformen sind zwischen dem ersten Mitnahmeelement und dem zweiten Mitnahmeelement eine erste Einführnut und eine zweite Einführnut vorgesehen, wobei die erste Einführnut und die zweite Einführnut unterschiedlich breit sind, und/oder wobei ein Winkel zwischen der ersten Einführnut und der zweiten Einführnut ungleich 180° ist. Die Anzahl der Einführnuten ist beliebig. Beispielsweise können auch drei, vier oder mehr Einführnuten vorgesehen sein. Dementsprechend können auch mehr als zwei Mitnahmeelemente vorgesehen sein. Beispielsweise sind drei Mitnahmeelemente vorgesehen, die in einem Winkel von 120° zueinander positioniert sind. Es können auch vier Mitnahmeelemente vorgesehen sein, die dann beispielsweise in einem Winkel von 90° zueinander positioniert sind. Dadurch, dass die erste Einführnut und die zweite Einführnut unterschiedlich breit sind, kann die zuvor schon erwähnte Mitnahmeeinrichtung nur in einer vorbestimmten Position in die Einführnuten eingeführt werden. Hierdurch ist eine Fehlmontage unmöglich. Die erste Einführnut und die zweite Einführnut können auch gleich breit sein. Der Winkel zwischen der ersten Einführnut und der zweiten Einführnut kann beispielsweise 140°, 150°, 160° oder 170° betragen. Der Winkel kann jedoch auch 180° betragen.

Ferner wird eine Filteranordnung, insbesondere eine Ölfilteranordnung, mit einem derartigen Filterelement und einem Filtergehäuse vorgeschlagen. Dabei weist das Filtergehäuse die erste Gegenfläche und die zweite Gegenfläche auf, wobei die erste Gegenfläche und die zweite Gegenfläche entlang einer Längsrichtung des Filtergehäuses voneinander beabstandet angeordnet sind.

Ein Abstand zwischen den Gegenflächen entspricht bevorzugt dem Abstand der Zugflächen voneinander oder unterscheidet sich nur geringfügig von diesem. Die beiden zuvor erwähnten Abstände sind bevorzugt so toleriert, dass beide Zugflächen an beiden Gegenflächen anliegen. Bevorzugt entspricht die Längsrichtung des Filtergehäuses der Längsrichtung des Filterelements. Insbesondere ist das Filtergehäuse im Wesentlichen rotationssymmetrisch zu der zuvor erwähnten Symmetrieachse aufgebaut. Das heißt, die Symmetrieachse kann auch dem Filtergehäuse zugeordnet sein. Das Filtergehäuse umfasst, wie zuvor erwähnt, den Filtergehäusetopf und den in den Filtergehäusetopf einschraubbaren Filtergehäusedeckel. Vorzugsweise sind die erste Gegenfläche und die zweite Gegenfläche an dem Filtergehäusedeckel vorgesehen. Der Filtergehäusetopf umfasst ein Auslassrohr, um das umlaufend eine ringförmige Nut vorgesehen ist. Mit Hilfe der ringförmigen Nut kann eine doppelkonzentrische Abdichtung des Filterelements in dem Filtergehäusetopf verwirklicht werden, wozu an dem Filterelement zwei konzentrisch angeordnete Dichtelemente vorgesehen sein können.

In Ausführungsformen umfasst die Filteranordnung ferner eine Mitnahmeeinrichtung, insbesondere ein Umgehungsventilgehäuse, die mit einem Filtergehäusedeckel des Filtergehäuses verbunden ist, wobei die Mitnahmeeinrichtung ein erstes Mitnahmegegenelement, das die erste Gegenfläche aufweist, und ein zweites Mitnahmegegenelement, das die zweite Gegenfläche aufweist, umfasst. Die Mitnahmeeinrichtung kann einteilig mit dem Filtergehäusedeckel ausgebildet sein. Beispielsweise können der Filtergehäusedeckel und die Mitnahmeeinrichtung ein einteiliges Kunststoffspritzgussbauteil ausbilden. Bevorzugt ist die Mitnahmeeinrichtung jedoch formschlüssig mit dem Filtergehäusedeckel verbunden und somit wieder von diesem trennbar. Der Filtergehäusedeckel weist hierzu vorzugsweise federelastisch verformbare Verbindungselemente, beispielsweise Rasthaken oder Schnapphaken, auf, die in einen Ringabschnitt der Mitnahmeeinrichtung einrasten oder einschnappen können. Die Mitnahmeeinrichtung ist vorzugsweise ein Kunststoffspritzgussbauteil. Die Mitnahmeelemente und die Mitnahmegegenelemente bilden zusammen insbesondere den zuvor erwähnten Bajonettverschluss.

In Ausführungsformen sind das erste Mitnahmegegenelement und das zweite Mitnahmegegenelement unterschiedlich breit und/oder ein Winkel zwischen dem ersten Mitnahmegegenelement und dem zweiten Mitnahmegegenelement ist ungleich 180°. Hierdurch ist gewährleistet, dass sich die Mitnahmeeinrichtung in die zuvor erwähnten Einführnuten des Stützrohrs einführen lässt. Hierdurch lässt sich ein Schlüssel-Schloss-System verwirklichen. Das erste Mitnahmegegenelement und das zweite Mitnahmegegenelement können auch gleich breit sein. Beispielsweise kann der Winkel 140°, 150°, 160° oder 170° betragen. Ferner kann der Winkel zwischen dem ersten Mitnahmegegenelement und dem zweiten Mitnahmegegenelement auch gleich 180° sein.

In Ausführungsformen weist das erste Mitnahmegegenelement einen ersten Federabschnitt und das zweite Mitnahmegegenelement einen zweiten Federabschnitt auf, wobei der erste Federabschnitt und der zweite Federabschnitt jeweils dazu eingerichtet sind, sich bei einer Beaufschlagung nur einer der Gegenflächen mit einer Kraft federelastisch zu verformen, so dass die mit der Kraft beaufschlagte Gegenfläche gegenüber der Längsrichtung verkippt. Durch das Verkippen der entsprechenden Gegenfläche verklemmt sich das Filterelement in dem Filtergehäuse. Hierdurch ist sichergestellt, dass bei der Verwendung eines Filterelements mit nur einer Zugfläche eine Demontage desselben nicht mehr oder zumindest nur schwer möglich ist. Hierdurch wird die Motivation, eine Fehlmontage vorzunehmen, verringert. Anstatt der Federabschnitte kann auch eine Wippenkonstruktion mit einer Wippe vorgesehen sein, die mit Hilfe einer Drehachse drehbar an der Mitnahmeeinrichtung gelagert ist. In diesem Fall können die Mitnahmegegenelemente an der Wippe vorgesehen sein. Bei einer einseitigen Belastung der Wippe, das heißt, wenn nur eine der Gegenflächen mit einer Kraft beaufschlagt wird, verkippen in diesem Fall beide Gegenflächen gegenüber der Längsrichtung. Dies erzeugt den zuvor erwähnten Effekt des Verklemmens des Federelements. Zusätzlich können auch noch Federabschnitte vorgesehen sein, beispielsweise um die Wippe in eine Ausgangsposition zurückzustellen.

### Kurze Beschreibung der Zeichnungen

Es zeigt dabei:
- Fig. 1:: eine schematische Schnittansicht einer Ausführungsform einer Filteranordnung;
- Fig. 2:: eine weitere schematische Schnittansicht der Filteranordnung gemäß Fig. 1;
- Fig. 3:: eine schematische Aufsicht einer Ausführungsform einer Stützstruktur für ein Filterelement für die Filteranordnung gemäß Fig.1;
- Fig. 4:: eine schematische Schnittansicht der Stützstruktur gemäß der Schnittlinie IV-IV der Fig. 3;
- Fig. 5:: eine weitere schematische Schnittansicht der Stützstruktur gemäß der Schnittlinie V-V der Fig. 3;
- Fig. 6:: eine schematische perspektivische Ansicht einer Ausführungsform einer Mitnahmeeinrichtung für die Filteranordnung gemäß Fig. 1;
- Fig. 7:: eine weitere schematische perspektivische Ansicht der Mitnahmeeinrichtung gemäß Fig. 6;
- Fig. 8:: eine schematische Seitenansicht der Mitnahmeeinrichtung gemäß Fig. 6;
- Fig. 9:: eine schematische Aufsicht der Mitnahmeeinrichtung gemäß Fig. 6;
- Fig. 10:: eine schematische perspektivische Ansicht einer weiteren Ausführungsform einer Mitnahmeeinrichtung für die Filteranordnung gemäß Fig. 1;
- Fig. 11:: eine weitere schematische perspektivische Ansicht der Mitnahmeeinrichtung gemäß Fig. 10;
- Fig. 12:: eine schematische Seitenansicht der Mitnahmeeinrichtung gemäß Fig. 10;
- Fig. 13:: eine schematische Aufsicht der Mitnahmeeinrichtung gemäß Fig. 10;
- Fig. 14:: eine schematische Aufsicht einer weiteren Ausführungsform einer Stützstruktur für ein Filterelement für die Filteranordnung gemäß Fig.1;
- Fig. 15:: eine schematische perspektivische Ansicht einer weiteren Ausführungsform einer Mitnahmeeinrichtung für die Filteranordnung gemäß Fig. 1;
- Fig. 16:: eine schematische Seitenansicht der Mitnahmeeinrichtung gemäß Fig. 15; und
- Fig. 17:: eine schematische Aufsicht der Mitnahmeeinrichtung gemäß Fig. 15.

In den Figuren sind gleiche oder funktionsgleiche Elemente, sofern nichts anderes angegeben ist, mit denselben Bezugszeichen versehen worden.

### Ausführungsform(en) der Erfindung

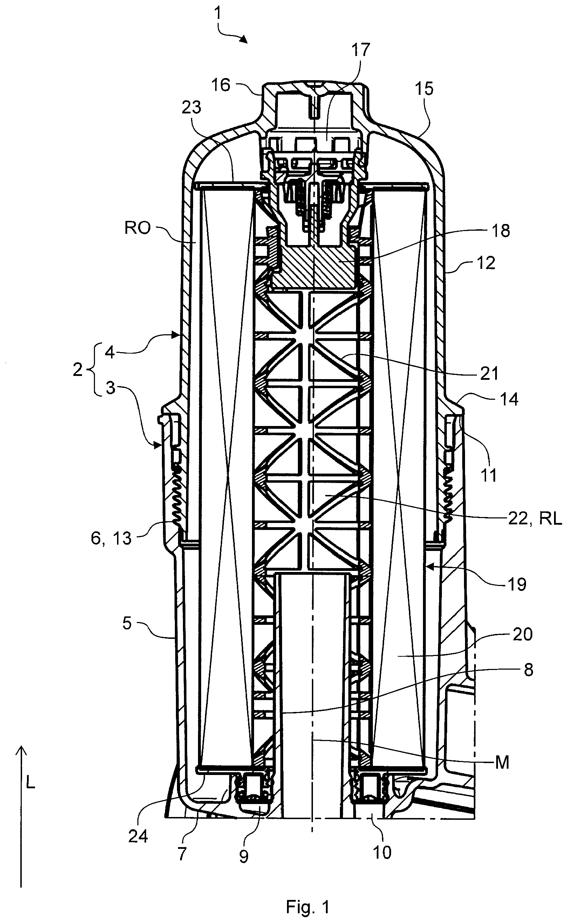

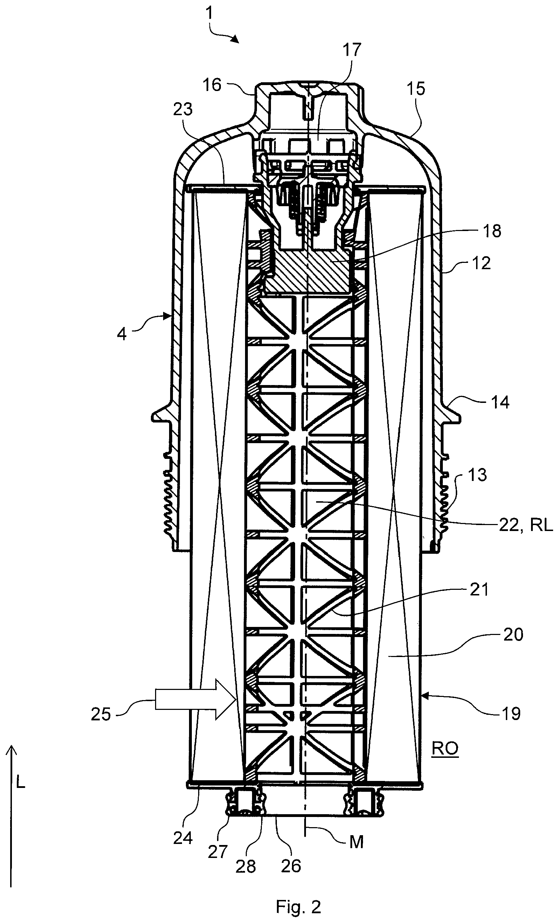

Die Fig. 1 und 2 zeigen jeweils eine schematische Schnittansicht einer Ausführungsform einer Filteranordnung 1. Die Filteranordnung 1 ist bevorzugt dazu eingerichtet, ein Fluid, beispielsweise ein Betriebsmittel eines Fahrzeugs, insbesondere Öl, zu filtern. Die Filteranordnung 1 kann somit eine Ölfilteranordnung sein. Die Filteranordnung 1 kann in Kraftfahrzeugen, insbesondere in Personenkraftwagen, Lastkraftwagen, landwirtschaftlichen Fahrzeugen oder Baumaschinen, in Wasserfahrzeugen, in Schienenfahrzeugen, in Luftfahrzeugen oder dergleichen Anwendung finden. Ferner kann die Filteranordnung 1 auch bei immobilen Anwendungen, wie beispielsweise in der Gebäudetechnik, eingesetzt werden.

Die Filteranordnung 1 umfasst ein Filtergehäuse 2 mit einem Filtergehäusetopf 3 und einem Filtergehäusedeckel 4. Der Filtergehäusetopf 3 kann fest mit einer Brennkraftmaschine oder einem Rahmenteil eines Kraftfahrzeugs verbunden sein. Der Filtergehäusetopf 3 ist beispielsweise aus einem Kunststoffmaterial oder einem Metallwerkstoff gefertigt. Der Filtergehäusetopf 3 kann ein Kunststoffspritzgussbauteil oder ein Metalldruckgussbauteil sein. Der Filtergehäusetopf 3 ist im Wesentlichen rotationssymmetrisch zu einer Mittel- oder Symmetrieachse M aufgebaut.

Der Filtergehäusetopf 3 umfasst einen topfförmigen Basisabschnitt 5, an dessen Oberseite ein Innengewinde 6 vorgesehen ist. In das Innengewinde 6 kann der Filtergehäusedeckel 4 eingeschraubt sein. Der Filteranordnung 1 ist eine Längsrichtung L zugeordnet.

Die Längsrichtung L ist parallel zu der Symmetrieachse M oder stimmt mit dieser überein. Die Längsrichtung L ist in der Orientierung der Fig. 1 und 2 von unten nach oben orientiert. Umgekehrt kann die Längsrichtung L auch von oben nach unten orientiert sein.

Weiterhin umfasst der Filtergehäusetopf 3 einen Boden 7 mit einem mittig angeordneten und rotationssymmetrisch zu der Symmetrieachse M ausgebildeten Auslassrohr 8. Das Auslassrohr 8 erstreckt in der Orientierung der Fig. 1 von unten in den topfförmigen Basisabschnitt 5 hinein. Das Auslassrohr 8 bildet einen Auslass der Filteranordnung 1, durch den Reinfluid, beispielsweise gefiltertes Öl, aus der Filteranordnung 1 abführbar ist. Das Auslassrohr 8 kann einteilig, insbesondere materialeinstückig, mit dem Boden 7 ausgebildet sein. Unter "einteilig" ist vorliegend zu verstehen, dass der Boden 7 und das Auslassrohr 8 ein gemeinsames einteiliges Bauteil bilden. Unter "materialeinstückig" ist vorliegend zu verstehen, dass der Boden 7 und das Auslassrohr 8 durchgehend aus demselben Material gefertigt sind.

Der Boden 7 umfasst weiterhin eine ringförmig um das Auslassrohr 8 umlaufende Nut 9. Die Nut 9 wiederum umfasst einen Auslass 10, durch den bei einer Demontage der Filteranordnung 1 in dem Basisabschnitt 5 aufgenommenes Fluid, beispielsweise Öl, abströmen kann. Der Filtergehäusetopf 3 umfasst weiterhin eine in der Orientierung der Fig. 1 oberhalb des Innengewindes 6 angeordnete umlaufende Oberkante 11.

Die Filteranordnung 1 umfasst weiterhin den zuvor schon erwähnten Filtergehäusedeckel 4. Der Filtergehäusedeckel 4 ist im Wesentlichen rotationssymmetrisch zu der Symmetrieachse M aufgebaut. Der Filtergehäusedeckel 4 kann aus einem Kunststoffmaterial oder einem Metallwerkstoff gefertigt sein. Der Filtergehäusedeckel 4 kann ein Kunststoffspritzgussbauteil oder ein Metalldruckgussbauteil sein. Der Filtergehäusedeckel 4 umfasst einen rohrförmigen Basisabschnitt 12, der rotationssymmetrisch zu der Symmetrieachse M aufgebaut ist. Weiterhin umfasst der Filtergehäusedeckel 4 ein an dem Basisabschnitt 12 vorgesehenes Außengewinde 13, das dazu eingerichtet ist, in das an dem Filtergehäusetopf 3 vorgesehene Innengewinde 6 einzugreifen, um den Filtergehäusedeckel 4 mit dem Filtergehäusetopf 3 lösbar zu verbinden.

Weiterhin umfasst der Filtergehäusedeckel 4 einen ringförmig um den Basisabschnitt 12 umlaufenden Flansch 14, der in einem zusammengebauten Zustand der Filteranordnung 1 (Fig. 1) an der Oberkante 11 des Filtergehäusetopfs 3 anliegt. Hierdurch kann der Filtergehäusedeckel 4 entlang der Symmetrieachse M axial an dem Filtergehäusetopf 3 positioniert werden. Zwischen dem Filtergehäusedeckel 4 und dem Filtergehäusetopf 3 kann eine nicht gezeigte Dichteinrichtung, beispielsweise ein O-Ring, vorgesehen sein.

Der Filtergehäusedeckel 4 umfasst weiterhin einen in der Orientierung der Fig. 1 und 2 den Basisabschnitt 12 nach oben hin abschließenden Boden 15. An dem Boden 15 kann ein Greifabschnitt 16 vorgesehen sein. Der Greifabschnitt 16 kann beispielsweise als Außenvierkant oder als Außensechskant ausgebildet sein, so dass der Filtergehäusedeckel 4 mit Hilfe eines Werkzeugs greifbar ist, um diesen in den Filtergehäusetopf 3 einzuschrauben.

Dem Greifabschnitt 16 abgewandt und innerhalb des Basisabschnitts 12 positioniert umfasst der Filtergehäusedeckel 4 eine Vielzahl an Verbindungselementen 17, von denen in den Fig. 1 und 2 lediglich eines mit einem Bezugszeichen versehen ist. Die Verbindungselemente 17 sind beispielsweise als Rasthaken oder Schnapphaken ausgebildet und sind federelastisch verformbar. Die Anzahl der Verbindungselemente 17 ist beliebig. Beispielsweise sind sechs oder mehr als sechs derartige Verbindungselemente 17 vorgesehen, die gleichmäßig um die Symmetrieachse M herum verteilt angeordnet sind. Mit Hilfe der Verbindungselemente 17 ist an dem Filtergehäusedeckel 4 eine Mitnahmeeinrichtung 18 befestigt. Die Mitnahmeeinrichtung 18 wird nachfolgend noch erläutert.

Die Filteranordnung 1 umfasst neben dem Filtergehäuse 2 ein Filterelement 19, insbesondere ein Ölfilterelement, das mit Hilfe der Mitnahmeeinrichtung 18 mit dem Filtergehäusedeckel 4 gekoppelt ist. Das Filterelement 19 ist bevorzugt rotationssysmmetrisch zu der Symmetrieachse M aufgebaut. Die Längsrichtung L beziehungsweise die Symmetrieachse M kann auch dem Filterelement 19 zugeordnet sein. Das Filterelement 19 umfasst ein Filtermedium 20. Das Filtermedium 20 ist insbesondere aus flächigem und zickzackförmigen gefaltetem Filtermaterial gebildet. Das zickzackförmige Filtermaterial bildet das Filtermedium 20 als sternförmigen Endlosfaltenbalg aus, der im Wesentlichen eine Zylinderfläche bildet. Das Filtermedium 20 kann von Innen von einem fluiddurchlässigen Mittelrohr oder Stützrohr 21 gestützt sein. Das Stützrohr 21 ist gitterförmig oder gelocht. Das Stützrohr 21 verhindert ein Kollabieren des Filtermediums 20 im Betrieb des Filterelements 19. Das Stützrohr 21 definiert einen Innenraum 22 des Filterelements 19. Das heißt, der Innenraum 22 ist von dem Stützrohr 21 umgeben, wobei das Stützrohr 21, wie zuvor erwähnt, nicht fluiddicht ist.

Das Filtermedium 20 und das Stützrohr 21 sind zwischen einer ersten Endscheibe 23 und einer zweiten Endscheibe 24 angeordnet. Das Stützrohr 21 und die Endscheiben 23, 24 können einteilig, insbesondere materialeinstückig, ausgebildet sein. Beispielsweise können das Stützrohr 21 und die Endscheiben 23, 24 ein einteiliges Kunststoffspritzgussbauteil sein. Alternativ können die Endscheiben 23, 24 auch an das Stützrohr 21 angeklebt oder angeschweißt sein. Das Stützrohr 21 kann auch lose zwischen den beiden Endscheiben 23, 24 positioniert sein, so dass dieses nicht fest mit den Endscheiben 23, 24 verbunden ist. Das Filtermedium 20 ist zwischen den Endscheiben 23, 24 angeordnet, wobei die Endscheiben 23, 24 stirnseitig mit dem Filtermedium 20 verklebt oder vergossen sein können oder wobei das Filtermedium 20 in die Endscheiben 23, 24 eingeschmolzen sein kann.

Das Filterelement 19 umfasst eine Reinseite RL sowie eine Rohseite RO. Die Rohseite RO ist dabei außenseitig zwischen dem Filtergehäuse 2 und dem Filtermedium 20 vorgesehen. Das Filtergehäuse 2 umfasst einen nicht gezeigten Einlass durch den zu reinigendes Fluid, beispielsweise partikelbeladenes Öl, der Rohseite RO zugeführt wird. Die Reinseite RL des Filterelements 19 ist innerhalb des Stützrohrs 21, das heißt, in dem Innenraum 22 vorgesehen. Eine Durchströmungsrichtung des Filterelements 19 ist in der Fig. 2 mit dem Bezugszeichen 25 bezeichnet. Im Betrieb der Filteranordnung 1 strömt nun das zu reinigende Fluid von der Rohseite RO in der Durchströmungsrichtung 25 durch das Filtermedium 20 hindurch auf die Reinseite RL. Von der Reinseite RL wird das gereinigte Fluid mit Hilfe des Auslassrohrs 8 abgeführt und beispielsweise einem Ölkreislauf der Brennkraftmaschine zugeführt.

An der zweiten Endscheibe 24 ist ein sich aus dieser herauserstreckender umlaufender Flansch 26 vorgesehen, an dem zwei Dichteelemente 27, 28 angebracht sind. Die Dichtelemente 27, 28 sind zueinander koaxial und konzentrisch positioniert. Das heißt, ein zweites Dichtelement 28 ist innerhalb eines ersten Dichtelements 27 positioniert. Die Dichtelemente 27, 28 sind rotationssymmetrisch zu der Symmetrieachse M aufgebaut. Die Dichtelemente 27, 28 dichten das Filterelement 19 und insbesondere die zweite Endscheibe 24 in dem zusammengebauten Zustand (Fig. 1) der Filteranordnung 1 gegenüber der in dem Filtergehäusetopf 3 vorgesehenen Nut 9 ab. Es ergibt sich hierdurch eine doppelkonzentrische Abdichtung des Filterelements 19 gegenüber dem Filtergehäusetopf 3. Bei einem Herausziehen des Filterelements 19 aus dem Filtergehäusetopf 3 strömt das in dem Filtergehäusetopf 3 verbleibende Fluid durch den Auslass 10 ab, um den Filtergehäusetopf 3 vollständig zu entleeren.

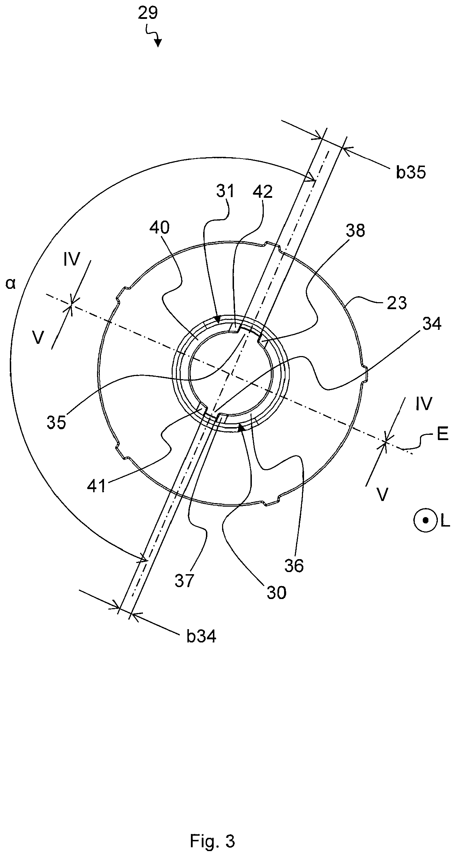

Das Stützrohr 21 mit den beiden Endscheiben 23, 24 bildet eine in den Fig. 3 bis 5 gezeigte Stützstruktur 29 des Filterelements 19. Die Stützstruktur 29 ist bevorzugt rotationssymmetrisch zu der Symmetrieachse M aufgebaut. Die Längsrichtung L beziehungsweise die Symmetrieachse M kann der Stützstruktur 29 zugeordnet sein. Das Filterelement 19 umfasst ein erstes Mitnahmeelement 30 sowie ein zweites Mitnahmeelement 31, die bevorzugt an der Stützstruktur 29 vorgesehen sind. Die Mitnahmeelemente 30, 31 sind, wie in den Fig. 3 bis 5 gezeigt, direkt an dem Stützrohr 21 vorgesehen. Alternativ können die Mitnahmeelemente 30, 31 auch an einer der Endscheiben 23, 24 vorgesehen sein.

Die Anzahl der Mitnahmeelemente 30, 31 ist beliebig. Beispielsweise können, wie in den Fig. 3 bis 5 gezeigt, zwei derartige Mitnahmeelemente 30, 31 vorgesehen sein. Alternativ können jedoch auch drei, vier oder mehr als vier derartige Mitnahmeelemente 30, 31 vorgesehen sein. Die Mitnahmeelemente 30, 31 liegen einander gegenüber. Für den Fall, dass mehr als zwei Mitnahmeelemente 30, 31 vorgesehen sind, können diese zueinander versetzt positioniert sein. Beispielsweise sind bei drei derartigen Mitnahmeelementen 30, 31 diese jeweils in einem Winkel von 120° zueinander positioniert. Bei vier derartigen Mitnahmeelementen 30, 31 sind diese jeweils in einem Winkel von 90° zueinander positioniert. Die Mitnahmeelemente 30, 31 können einteilig, insbesondere materialeinstückig, mit dem Stützrohr 21 ausgebildet sein.

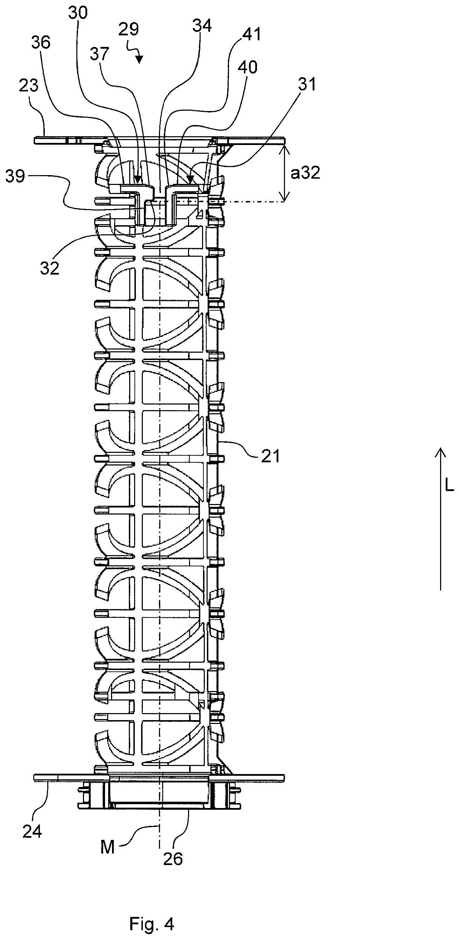

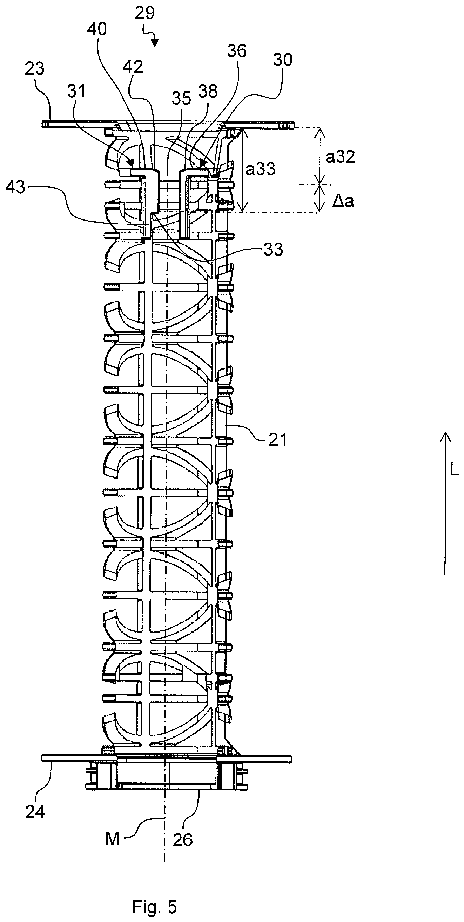

Dem ersten Mitnahmeelement 30 ist eine erste Zugfläche 32 (Fig. 4), und dem zweiten Mitnahmeelement 31 ist eine zweite Zugfläche 33 (Fig. 5) zugeordnet. Die Zugflächen 32, 33 bilden jeweils eine Ebene, das heißt, sie sind nicht gewölbt, und sind senkrecht zu der Längsrichtung L beziehungsweise senkrecht zu der Symmetrieachse M positioniert. Das heißt, die Zugflächen 32, 33 bilden jeweils keine geneigte Rampe. Dabei ragen die erste Zugfläche 32 und die zweite Zugfläche 33 radial in den Innenraum 22 des Filterelements 19 hinein. Zwischen dem ersten Mitnahmeelement 30 und dem zweiten Mitnahmeelement 31 sind eine erste Einführnut 34 und eine zweite Einführnut 35 vorgesehen. Unter "senkrecht" ist vorliegend bevorzugt ein Winkel von 90° ± 10°, weiter bevorzugt von 90° ± 5°, weiter bevorzugt von 90° ± 1°, weiter bevorzugt von genau 90° zu verstehen.

Die Einführnuten 34, 35 sind in einem Winkel α zueinander positioniert. Der Winkel α kann, muss jedoch nicht, 180° betragen. Die Einführnuten 34, 35 können, wie in der Fig. 3 gezeigt, bezüglich einer Schnittebene E seitlich zueinander versetzt sein, so dass die Einführnuten 34, 35 bezüglich der Schnittebene E unsymmetrisch positioniert sind. Die Einführnuten 34, 35 können einander jedoch auch exakt gegenüberliegen, so dass kein seitlicher Versatz vorgesehen ist. Die Zugflächen 32, 33 können dementsprechend ebenfalls in dem Winkel α zueinander positioniert sein.

Die erste Einführnut weist eine Breite b34 und die zweite Einführnut 35 weist eine Breite b35 auf. Die Breiten b34, b35 sind unterschiedlich groß. Beispielsweise ist die Breite b35 größer als die Breite b34. Umgekehrt kann auch die Breite b34 größer als die Breite b35 sein. Weiterhin können die beiden Einführnuten 34, 35 auch gleich breit sein. In diesem Fall sind die Breiten b34, b35 gleich groß. Die Zugflächen 32, 33 sind jeweils senkrecht zu der ihr zugeordneten Einführnut 34, 35 positioniert. Insbesondere ist die erste Zugfläche 32 der ersten Einführnut 34, und die zweite Zugfläche 33 ist der zweiten Einführnut 35 zugeordnet. Die Zugflächen 32, 33 bilden in der jeweiligen Einführnut 34, 35 jeweils einen Hinterschnitt. Das heißt, die jeweilige Breite b34, b35 vergrößert sich im Bereich der entsprechenden Zugfläche 32, 33.

Die erste Zugfläche 32 und die zweite Zugfläche 33 sind entlang der Längsrichtung L betrachtet linear voneinander beabstandet angeordnet. Insbesondere ist die erste Zugfläche 32 um einen Abstand a32 von der ersten Endscheibe 23 entfernt positioniert. Dementsprechend ist die zweite Zugfläche 33 um einen Abstand a33 von der ersten Endscheibe 23 entfernt positioniert. Dabei ist der Abstand a33 größer als der Abstand a32. Umgekehrt kann auch der Abstand a32 größer sein als der Abstand a33. Dabei sind die Abstände a32, a33 jedoch stets unterschiedlich groß. Beispielsweise unterscheiden sich die Abstände a32, a33 um einen Abstand Δa (Fig. 5). Der Abstand Δa ist der Betrag der Differenz der Abstände a32, a33. Das heißt, die erste Zugfläche 32 ist in der Längsrichtung L betrachtet um den Abstand Δa linear von der zweiten Zugfläche 33 beabstandet positioniert.

Das erste Mitnahmeelement 30 umfasst weiterhin eine senkrecht zu der Längsrichung L beziehungsweise senkrecht zu der Symmetrieachse M positionierte Oberfläche 36 sowie zwei Einführschrägen 37, 38. Die Einführschrägen sind schräg zu der Längsrichtung L orientiert. Ferner umfasst das erste Mitnahmeelement 30 noch eine Anschlagsfläche 39, die senkrecht zu der ersten Zugfläche 32 positioniert ist. Die erste Zugfläche 32 und die Anschlagsfläche 39 definieren einen Hinterschnitt in oder an dem ersten Mitnahmeelement 30. Dementsprechend umfasst das zweite Mitnahmeelement 31 eine senkrecht zu der Längsrichtung L beziehungsweise zu der Symmetrieachse M positionierte Oberfläche 40 sowie zwei Einführschrägen 41, 42, die relativ zu der Längsrichtung L geneigt sind. Weiterhin umfasst das zweite Mitnahmeelement 31 eine Anschlagsfläche 43, die senkrecht zu der zweiten Zugfläche 33 positioniert ist. Die zweite Zugfläche 33 und die Anschlagsfläche 43 definieren einen Hinterschnitt in oder an dem zweiten Mitnahmeelement 31.

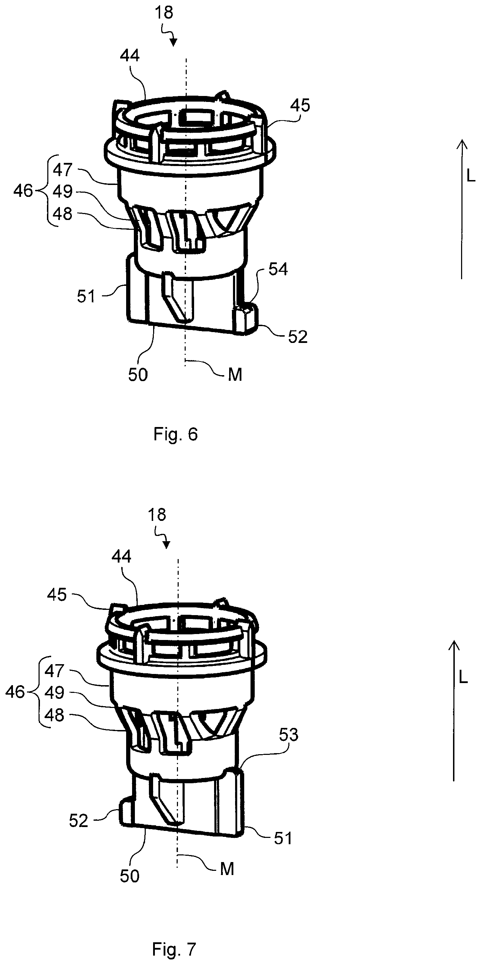

Nun zurückkehrend zu der in den Fig. 6 bis 9 gezeigten Mitnahmeeinrichtung 18. Die Mitnahmeeinrichtung 18 kann Teil des Filtergehäusedeckels 4 sein. Beispielsweise kann die Mitnahmeeinrichtung 18 einteilig mit dem Filtergehäusedeckel 4 ausgebildet sein. Vorliegend ist die Mitnahmeeinrichtung 18 jedoch mit Hilfe der an dem Filtergehäusedeckel 4 vorgesehenen Verbindungselemente 17 formschlüssig mit dem Filtergehäusedeckel 4 verbunden. Eine formschlüssige Verbindung entsteht durch das Ineinander- oder Hintergreifen von mindestens zwei Verbindungspartnern, in diesem Fall den Verbindungselementen 17 und der Mitnahmeeinrichtung 18.

Die Mitnahmeeinrichtung 18 ist vorzugsweise einteilig, insbesondere materialeinstückig, ausgebildet. Die Mitnahmeeinrichtung 18 kann ein Kunststoffspritzgussbauteil sein. Insbesondere ist die Mitnahmeeinrichtung 18 ein Umgehungsventilgehäuse eines Umgehungsventils der Filteranordnung 1. Die Mitnahmeeinrichtung 18 ist rotationssymmetrisch zu der Symmetrieachse M aufgebaut. Der Mitnahmeeinrichtung 18 kann die Symmetrieachse M beziehungsweise die Längsrichtung L zugeordnet sein.

Die Mitnahmeeinrichtung 18 weist einen umlaufenden Befestigungsring oder Ringabschnitt 44 auf, in dem die Verbindungselemente 17 eingeschnappt oder eingerastet sind. Mit Hilfe von Stegabschnitten 45, von denen in den Fig. 6 bis 8 nur einer mit einem Bezugszeichen versehen ist, ist der Ringabschnitt 44 mit einem Basisabschnitt 46 der Mitnahmeeinrichtung 18 einteilig verbunden. Die Stegabschnitte 45 stoßen an den Verbindungselementen 17 an beziehungsweise sind zwischen diesen positioniert, so dass die Mitnahmeeinrichtung 18 rotatorisch an dem Filtergehäusedeckel 4 festgelegt ist. Das heißt, die Mitnahmeeinrichtung 18 kann sich gegenüber dem Filtergehäusedeckel 4 nicht oder zumindest nur geringfügig verdrehen. Der Basisabschnitt 46 umfasst einen rohrförmigen ersten Abschnitt 47 sowie einen rohrförmigen zweiten Abschnitt 48, die mit Hilfe von Stegabschnitten 49 einteilig miteinander verbunden sind.

An den zweiten Abschnitt 48 schließt ein plattenförmiger Endabschnitt 50 an, an dem wiederum ein erstes Mitnahmegegenelement 51 sowie ein zweites Mitnahmegegenelement 52 vorgesehen sind. Das erste Mitnahmegegenelement 51 ist dabei dem ersten Mitnahmeelement 30 zugeordnet, und das zweite Mitnahmegegenelement 52 ist dem zweiten Mitnahmeelement 31 zugeordnet. Das erste Mitnahmegegenelement 51 umfasst eine erste Gegenfläche 53, die zu der ersten Zugfläche 32 korrespondiert, und das zweite Mitnahmegegenelement 52 umfasst eine zweite Gegenfläche 54, die zu der zweiten Zugfläche 33 korrespondiert. Das heißt, bei einem Herausziehen des Filterelements 19 aus dem Filtergehäusetopf 3 mit Hilfe der Mitnahmeeinrichtung 18 liegt die erste Gegenfläche 53 an der ersten Zugfläche 32, und die zweite Gegenfläche 54 liegt an der zweiten Zugfläche 33 an.

Das erste Mitnahmegegenelement 51 weist eine Breite b51, und das zweite Mitnahmegegenelement 52 weist eine Breite b52 auf. Die Breite b52 ist größer als die Breite b51. Die Breite b51 des ersten Mitnahmegegenelements 51 ist vorzugsweise geringfügig kleiner als die Breite b34 der ersten Einführnut 34, so dass das erste Mitnahmegegenelement 51 durch die erste Einführnut 34 in das Stützrohr 21 einführbar ist. Die Breite b52 des zweiten Mitnahmegegenelements 52 ist insbesondere geringfügig kleiner als die Breite b35 der zweiten Einführnut 35, so dass das zweite Mitnahmegegenelement 52 durch die zweite Einführnut 35 in das Stützrohr 21 einführbar ist. Die Mitnahmegegenelemente 51, 52 sind in dem Winkel α relativ zueinander positioniert.

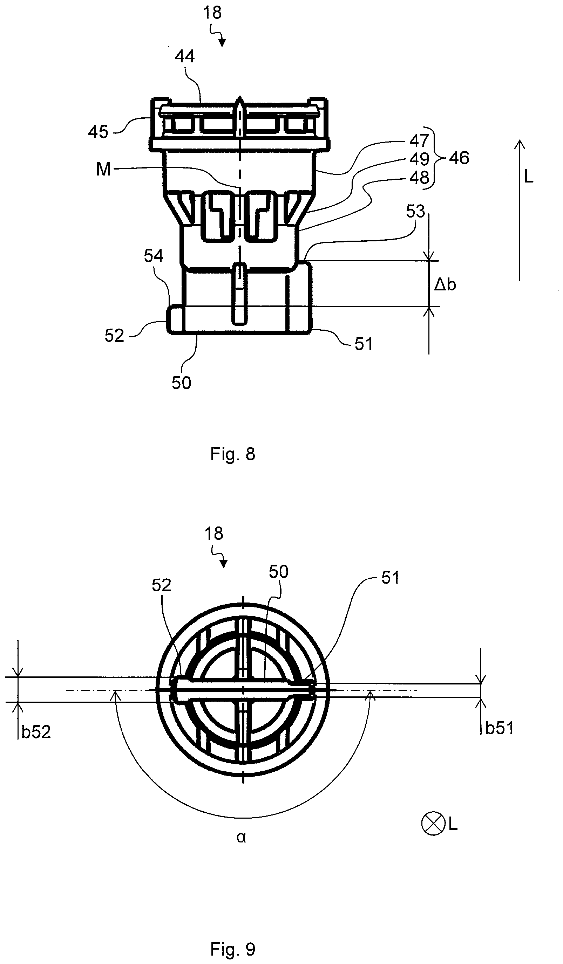

Wie die Fig. 8 zeigt, sind die erste Gegenfläche 53 und die zweite Gegenfläche 54 in der Längsrichtung L betrachtet voneinander beabstandet angeordnet. Insbesondere sind die Gegenflächen 53, 54 um einen Abstand Δb voneinander beabstandet positioniert. Der Abstand Δb ist bevorzugt gleich dem Abstand Δa der Zugflächen 32, 33 voneinander. Die beiden Abstände Δa, Δb sind bevorzugt so toleriert, dass im montierten Zustand der Mitnahmeeinrichtung 18 jede Zugfläche 32, 33 an der ihr zugeordneten Gegenfläche 53, 54 anliegt.

Aufgrund der unterschiedlichen Breiten b51, b52 der Mitnahmegegenelemente 51, 52 kann die Mitnahmeeinrichtung 18 nur in einer Position durch die Einführnuten 34, 35 hindurchgeführt werden. Die Mitnahmeeinrichtung 18 kann hierzu auf die Oberflächen 36, 40 aufgesetzt und gegenüber dem Filterelement 19 verdreht werden. Sobald die Mitnahmeeinrichtung 18 in die einzig mögliche korrekte Position gegenüber dem Filterelement 19 verdreht ist, gleiten die Mitnahmegegenelemente 51, 52 in die Einführnuten 34, 35 ein. Die Einführschrägen 37, 38, 41, 42 erleichtern dabei ein Einführen der Mitnahmegegenelemente 51, 52 in die Einführnuten 34, 35.

Nach dem Einführen der Mitnahmeeinrichtung 18 in das Stützrohr 21 wird diese gegenüber dem Stützrohr 21 verdreht, so dass die Mitnahmegegenelemente 51, 52 gegen die Anschlagsfläche 39, 43 der Mitnahmeelemente 30, 31 gedrückt werden. Die Mitnahmegegenelemente 51, 52 hintergreifen dann die Mitnahmeelemente 30, 31 formschlüssig. Das Filterelement 19 kann nun zur Montage der Filteranordnung 1 mitsamt der Mitnahmeeinrichtung 18 in den Filtergehäusetopf 3 eingeführt werden. Alternativ kann das Filterelement 19 auch ohne die Mitnahmeeinrichtung 18 in den Filtergehäusetopf 3 eingeführt werden. In diesem Fall wird die Mitnahmeeinrichtung 18 später montiert. Bei dem Aufschrauben des Filtergehäusedeckels 4, an den das Filterelement 19 mit Hilfe der Mitnahmeeinrichtung 18 gekoppelt ist, kann so eine winkelgenaue Positionierung des Filterelements 19 in dem Filtergehäusetopf 3 erzielt werden.

Zur Demontage der Filteranordnung 1, beispielsweise im Servicefall, kann das Filterelement 19 mit Hilfe der Mitnahmeeinrichtung 18 bei dem Abschrauben des Filtergehäusedeckels 4 von dem Filtergehäusetopf 3 aus dem Filtergehäusetopf 3 herausgezogen werden. Bei dem Abschrauben des Filtergehäusedeckels 3 verdreht sich die Mitnahmeeinrichtung 18 solange gegenüber dem Filterelement 19, bis die Mitnahmegegenelemente 51, 52 an den korrespondierenden Anschlagsflächen 39, 43 der Mitnahmeelemente 30, 31 anliegen. Die Mitnahmegegenelemente 51, 52 hintergreifen dann die Mitnahmeelemente 30, 31 formschlüssig. Sobald die Mitnahmegegenelemente 51, 52 an den Anschlagsflächen 39, 43 anliegen, dreht sich das Filterelement 19 bei dem Abschrauben des Filtergehäusedeckels 3 mit diesem mit.

Mit Hilfe der geometrischen Ausgestaltung der Mitnahmeelemente 30, 31 beziehungsweise der Mitnahmegegenelemente 51, 52 lässt sich somit eine beliebige Ablaufsteuerung bei dem Abschrauben des Filtergehäusedeckels 4 verwirklichen. Bei der Ablaufsteuerung kann es sich beispielsweise um die zuvor erwähnte doppelkonzentrische Abdichtung des Filterelements 19 in dem Filtergehäusetopf 3 mit Hilfe der Dichtelemente 27, 28, um einen zentrisch oder exzentrisch angeordneten Pin oder Pömpel oder um ein Ablaufventil handeln. Aufgrund der unterschiedlichen geometrischen Ausgestaltung der Mitnahmeelemente 30, 31 beziehungsweise der Mitnahmegegenelemente 51, 52 lässt sich ferner ein Schlüssel-Schloss-System verwirklichen, so dass die Montage und Demontage eines nicht der Filteranordnung 1 zugehörigen Filterelements nicht möglich ist. Eine Fehlmontage wird hierdurch ausgeschlossen. Das Element der Ablaufsteuerung kann an der zweiten Endscheibe 24 vorgesehen sei; bei diesem kann es sich bspw. um ein exzentrisches oder koaxiales Dichtelement handeln (bezogen auf die Längsrichtung L).

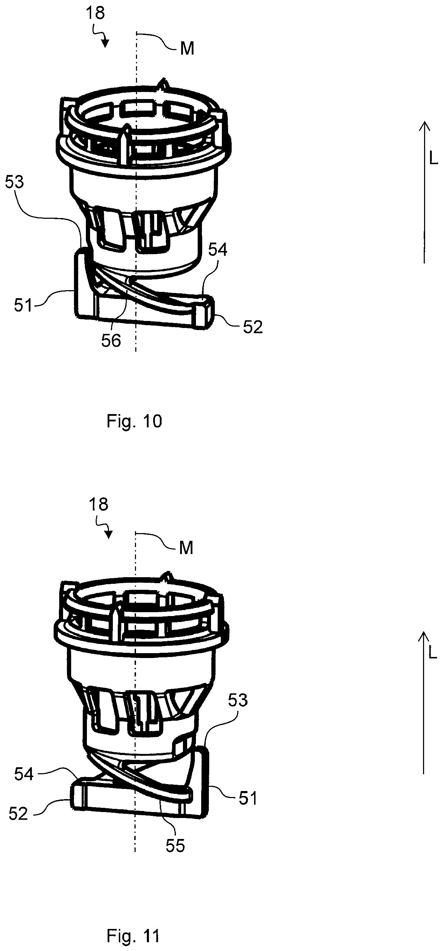

Die Fig. 10 bis 13 zeigen eine weitere Ausführungsform einer wie zuvor erläuterten Mitnahmeeinrichtung 18. Die Mitnahmeeinrichtung 18 gemäß den Fig. 10 bis 13 unterscheidet sich von der Mitnahmeeinrichtung 18 gemäß den Fig. 6 bis 9 nur dadurch, dass das erste Mitnahmegegenelement 51 einen ersten Federabschnitt 55, und das zweite Mitnahmegegenelement 52 einen zweiten Federabschnitt 56 aufweist. Die Federabschnitte 55, 56 sind federelastisch verformbar.

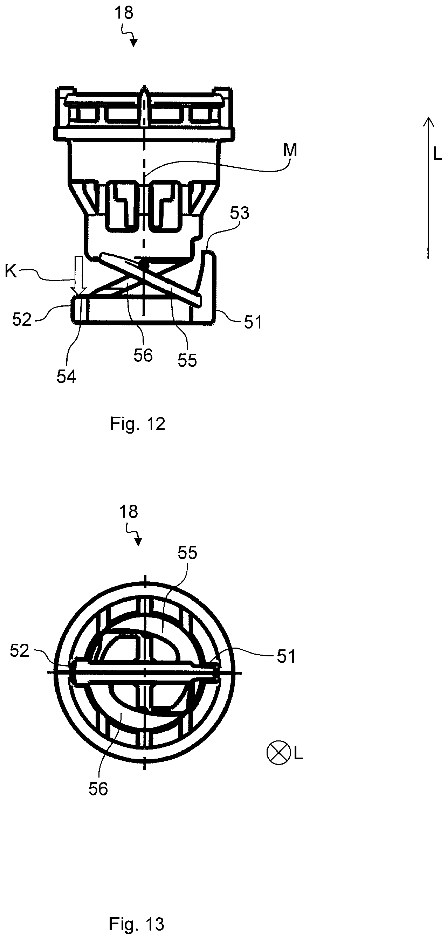

Für den Fall, dass nur eine der Gegenflächen 53, 54 mit einer Kraft K (Fig. 12) beufschlagt wird, verkippt die entsprechende Gegenfläche 53, 54, in diesem Fall die zweite Gegenfläche 54, gegenüber der Längsrichtung L. Das heißt, das Filterelement 19 ist nur dann aus dem Filtergehäuse 2 herausziehbar, wenn beide Gegenflächen 53, 54 gleichsam mit der Kraft K beaufschlagt werden. Dies ist nur dann der Fall, wenn das Filterelement 19 zwei Zugflächen 32, 33 aufweist. Für den Fall, dass ein Filterelement verwendet wird, welches nur eine derartige Zugfläche 32, 33 aufweist, verformt sich zumindest einer der Federabschnitte 55, 56 federelastisch, wodurch die entsprechende Gegenfläche 53, 54 verkippt wird. Hierdurch verklemmt sich das Filterelement in dem Filtergehäusetopf 3, wodurch eine Demontage des Filterelements nicht möglich oder zumindest erschwert ist.

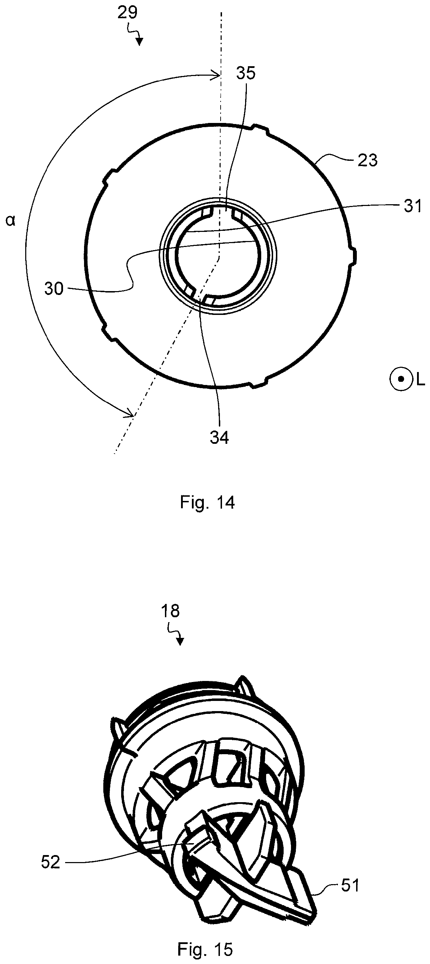

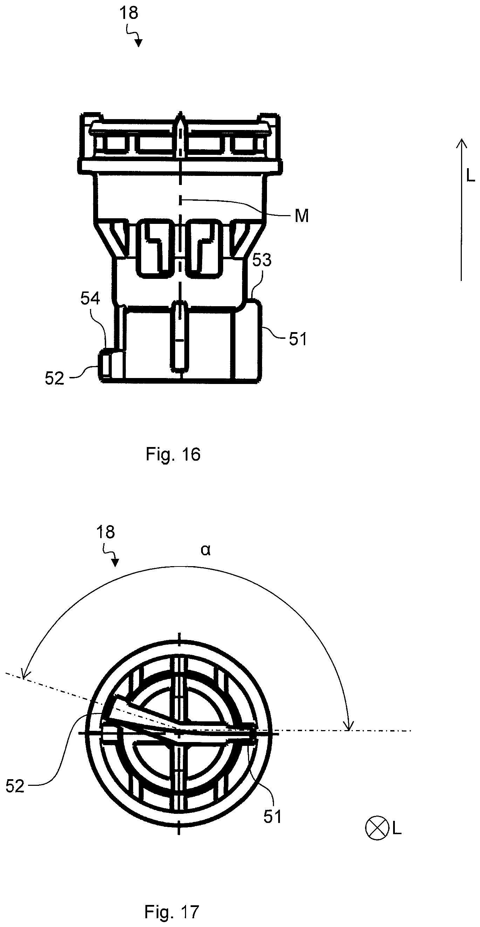

Die Fig.14 zeigt eine weitere Ausführungsform einer wie zuvor erläuterten Stützstruktur 29 für ein wie zuvor erläutertes Filterelement 19. Bei dieser Ausführungsform der Stützstruktur 29 sind wiederum eine erste Einführnut 34 sowie eine zweite Einführnut 35 vorgesehen, die zwischen einem ersten Mitnahmeelement 30 und einem zweiten Mitnahmeelement 31 eines nicht gezeigten Stützrohrs 21 vorgesehen sind. Dabei ist der zuvor schon erläuterte Winkel α zwischen den beiden Einführnuten 34, 35 ungleich 180°. Beispielsweise beträgt der Winkel α 140°, 150°, 160°, 170° oder dergleichen. Dementsprechend ist auch eine in den Fig. 15 bis 17 gezeigte Mitnahmeeinrichtung 18 an die veränderte Stützstruktur 29 angepasst. Das heißt, der Winkel α zwischen dem ersten Mitnahmegegenelement 51 und dem zweiten Mitnahmegegenelement 52 ist ungleich 180°. Ansonsten unterscheidet sich die Mitnahmeeinrichtung 18 gemäß den Fig. 15 bis 17 nicht von der Mitnahmeeinrichtung 18 gemäß den Fig. 6 bis 9. Zusätzlich kann die in den Fig. 15 bis 17 gezeigte Mitnahmeeinrichtung 18 noch mit den in den Fig. 10 bis 13 gezeigten Federabschnitten 55, 56 ausgestattet sein.

### Verwendete Bezugszeichen:

- 1: Filteranordnung
- 2: Filtergehäuse
- 3: Filtergehäusetopf
- 4: Filtergehäusedeckel
- 5: Basisabschnitt
- 6: Innengewinde
- 7: Boden
- 8: Auslassrohr
- 9: Nut
- 10: Auslass
- 11: Oberkante
- 12: Basisabschnitt
- 13: Außengewinde
- 14: Flansch
- 15: Boden
- 16: Greifabschnitt
- 17: Verbindungselement
- 18: Mitnahmeeinrichtung
- 19: Filterelement
- 20: Filtermedium
- 21: Stützrohr
- 22: Innenraum
- 23: Endscheibe
- 24: Endscheibe
- 25: Durchströmungsrichtung
- 26: Flansch
- 27: Dichtelement
- 28: Dichtelement
- 29: Stützstruktur
- 30: Mitnahmeelement
- 31: Mitnahmeelement
- 32: Zugfläche
- 33: Zugfläche
- 34: Einführnut
- 35: Einführnut
- 36: Oberfläche
- 37: Einführschräge
- 38: Einführschräge
- 39: Anschlagsfläche
- 40: Oberfläche
- 41: Einführschräge
- 42: Einführschräge
- 43: Anschlagsfläche
- 44: Ringabschnitt
- 45: Stegabschnitt
- 46: Basisabschnitt
- 47: Abschnitt
- 48: Abschnitt
- 49: Stegabschnitt
- 50: Endabschnitt
- 51: Mitnahmegegenelement
- 52: Mitnahmegegenelement
- 53: Gegenfläche
- 54: Gegenfläche
- 55: Federabschnitt
- 56: Federabschnitt

- a32: Abstand
- a33: Abstand
- b34: Breite
- b35: Breite
- b51: Breite
- b52: Breite
- E: Schnittebene
- K: Kraft
- L: Längsrichtung
- M: Symmetrieachse
- RL: Reinseite
- RO: Rohseite
- α: Winkel
- Δa: Abstand
- Δb: Abstand

## Patentansprüche

1. Filterelement (19), insbesondere Flüssigkeitsfilterelement, insbesondere Ölfilterelement oder Kraftstofffilterelement,
- mit einem Filtermediumkörper, der einen Innenraum (22) zumindest teilumfänglich umgibt,
- und mit einer ersten Zugfläche (32), die dazu eingerichtet ist, mit einer korrespondierenden ersten Gegenfläche (53) eines Filtergehäuses (2) zusammenzuwirken, und einer zweiten Zugfläche (33), die dazu eingerichtet ist, mit einer korrespondierenden zweiten Gegenfläche (54) des Filtergehäuses (2) zusammenzuwirken,
- wobei die Zugflächen (32, 33) und die Gegenflächen (53, 54) dazu eingerichtet sind, derart zusammenzuwirken, dass das Filterelement (19) mit Hilfe derselben aus dem Filtergehäuse (2) herausziehbar ist, und wobei die erste Zugfläche (32) und die zweite Zugfläche (33) entlang einer Längsrichtung (L) des Filterelements (19) voneinander beabstandet angeordnet sind,
- wobei das Filterelement (19) ein erstes Mitnahmeelement (30) aufweist, das die erste Zugfläche (32) aufweist, und ein zweites Mitnahmeelement (31) aufweist, das die zweite Zugfläche (33) aufweist, wobei die erste Zugfläche (32) und die zweite Zugfläche (33) in den von dem Filtermediumkörper zumindest teilumfänglich umgebenen Innenraum (22) des Filterelements (19) radial hineinragen,
- und wobei das erste Mitnahmeelement (30) und/oder das zweite Mitnahmeelement (31) eine Anschlagfläche (39, 43) aufweisen, die umfänglich an die Zugflächen (32, 33) des ersten und/oder zweiten Mitnahmeelements (30, 31) angrenzend vorliegt und die dazu eingerichtet ist, in einer Benutzungsanordnung mit einer korrespondierenden Gegenanschlagfläche des Filtergehäuses (2) zur Ausbildung einer zumindest einseitig wirksamen, gegenüber dem Filtergehäuse (2) relativen Drehfreiheitsgradhemmung um die Längsachse (L) zusammenzuwirken.

2. Filterelement nach Anspruch 1, wobei die Anschlagfläche (39, 43) im Wesentlichen normal zu der Zugfläche (32, 33) ausgerichtet ist und/oder bevorzugt im Wesentlichen parallel zu einer Längsachse des Filterelements radial in den Innenraum einragt.

3. Filterelement nach Anspruch 1 oder 2, wobei die erste Zugfläche (32) und die zweite Zugfläche (33) jeweils eine Ebene aufweisen, die jeweils normal zu der Längsrichtung (L) orientiert ist.

4. Filterelement nach einem der Ansprüche 1 bis 3, wobei das Filterelement (19) ein Rundfilterelement ist, das eine im Wesentlichen hohlzylindrische Gestalt aufweist.

5. Filterelement nach Anspruch 4, ferner umfassend ein Stützrohr (21) in dem Innenraum (22), an dem die erste Zugfläche (32) und die zweite Zugfläche (33) vorgesehen sind.

6. Filterelement nach einem der Ansprüche 1 bis 4, umfassend eine erste Endscheibe (23) an einer ersten Längsstirnfläche des Filterelements (19), die bevorzugt einen Bundhülsenabschnitt aufweist, der sich zumindest entlang eines Längsachsenabschnitts in den Innenraum (22) erstreckt, wobei bevorzugt die erste Zugfläche (32) und die zweite Zugfläche (33) an dem Bundhülsenabschnitt vorliegen.

7. Filterelement nach einem der Ansprüche 1 bis 6, wobei zwischen dem ersten Mitnahmeelement (30) und dem zweiten Mitnahmeelement (31) eine erste Einführnut (34) und eine zweite Einführnut (35) vorgesehen sind, wobei bevorzugt die erste Einführnut (34) und die zweite Einführnut (35) unterschiedlich breit sind, und/oder wobei bevorzugt ein Winkel (a) zwischen der ersten Einführnut (34) und der zweiten Einführnut (35) ungleich 180° ist.

8. Filterelement nach einem der Ansprüche 1 bis 7, umfassend eine zweite Endscheibe (27), die an einer der ersten Endscheibe (23) in Längsrichtung (L) abgewandten zweiten Längsstirnfläche vorliegt, wobei an der zweiten Endscheibe (27) bevorzugt ein Element einer Ablaufsteuerung, bevorzugt ein sich in Längsrichtung axial erstreckendes exzentrisches oder koaxiales Dichtelement, vorliegt.

9. Filteranordnung (1), insbesondere Ölfilteranordnung, mit einem Filterelement (19) nach einem der Ansprüche 1 bis 8 und einem Filtergehäuse (2), wobei das Filtergehäuse (2) die erste Gegenfläche (53) und die zweite Gegenfläche (54) aufweist, und wobei die erste Gegenfläche (53) und die zweite Gegenfläche (54) entlang einer Längsrichtung (L) des Filtergehäuses (2) voneinander beabstandet angeordnet sind, wobei die Zugflächen (32, 33) des Filterelements (19) und die Gegenflächen (53, 54) des Filtergehäuses (2) dazu eingerichtet sind, derart zusammenzuwirken, dass das Filterelement (19) mit Hilfe derselben aus dem Filtergehäuse (2) herausziehbar ist, und wobei die Anschlagfläche (39, 43) des ersten Mitnahmeelements (30) und/oder des zweiten Mitnahmeelements (31) des Filterelements (19) dazu eingerichtet ist, in einer Benutzungsanordnung mit einer korrespondierenden Gegenanschlagfläche des Filtergehäuses (2) zur Ausbildung einer zumindest einseitig wirksamen, gegenüber dem Filtergehäuse (2) relativen Drehfreiheitsgradhemmung um die Längsachse (L) zusammenzuwirken.

10. Filteranordnung nach Anspruch 9, ferner umfassend eine Mitnahmeeinrichtung (18), insbesondere an einem Umgehungsventilgehäuse, die mit einem Filtergehäusedeckel (4) des Filtergehäuses (2) verbunden ist, wobei die Mitnahmeeinrichtung (18) ein erstes Mitnahmegegenelement (51), das die erste Gegenfläche (53) aufweist, und ein zweites Mitnahmegegenelement (52), das die zweite Gegenfläche (54) aufweist, umfasst.

11. Filteranordnung nach Anspruch 10, wobei das erste Mitnahmegegenelement (51) und das zweite Mitnahmegegenelement (52) unterschiedlich breit sind, und/oder wobei ein Winkel (a) zwischen dem ersten Mitnahmegegenelement (51) und dem zweiten Mitnahmegegenelement (52) ungleich 180° ist.

12. Filteranordnung nach Anspruch 10 oder 11, wobei das erste Mitnahmegegenelement (51) einen ersten Federabschnitt (55) und das zweite Mitnahmegegenelement (52) einen zweiten Federabschnitt (56) aufweist, wobei der erste Federabschnitt (55) und der zweite Federabschnitt (56) jeweils dazu eingerichtet sind, sich bei einer Beaufschlagung nur einer der Gegenflächen (53, 54) mit einer Kraft (K) federelastisch zu verformen, so dass die mit der Kraft (K) beaufschlagte Gegenfläche (53, 54) gegenüber der Längsrichtung (L) verkippt.

## Claims

1. Filter element (19), in particular liquid filter element, in particular oil filter element or fuel filter element,
- with a filter medium body surrounding an interior space (22) at least partially circumferentially,
- and with a first traction surface (32) which is configured to cooperate with a corresponding first counter-surface (53) of a filter housing (2), and a second traction surface (33) which is configured to cooperate with a corresponding second counter-surface (54) of the filter housing (2),
- wherein the traction surfaces (32, 33) and the counter-surfaces (53, 54) are configured to cooperate in such a way that the filter element (19) can be pulled out of the filter housing (2) with the aid thereof, and wherein the first traction surface (32) and the second traction surface (33) are disposed along a longitudinal direction (L) of the filter element (19) and spaced apart from each other,
- wherein the filter element (19) features a first entrainment element (30) that features the first traction surface (32), and features a second entrainment element (31) that features the second traction surface (33), wherein the first traction surface (32) and the second traction surface (33) protrude radially into the interior space (22) of the filter element (19) surrounded at least partially circumferentially by the filter medium body,
- and wherein the first entrainment element (30) and/or the second entrainment element (31) feature a stop surface (39, 43) circumferentially adjacent to the traction surfaces (32, 33) of the first and/or second entrainment element (30, 31) and which is configured to cooperate in a usage arrangement with a corresponding counter stop surface of the filter housing (2) for realizing a relative rotational degree of freedom inhibition around the longitudinal axis (L) which is at least effective on one side with respect to the filter housing (2).

2. Filter element according to claim 1, wherein the stop surface (39, 43) is substantially normally aligned with respect to the traction surface (32, 33) and/or protrudes radially into the interior space preferably substantially parallel to a longitudinal axis of the filter element.

3. Filter element according to claim 1 or 2, wherein the first traction surface (32) and the second traction surface (33) each feature a plane oriented respectively normally to the longitudinal direction (L).

4. Filter element according to one of the claims 1 to 3, wherein the filter element (19) is a round filter element that features substantially a hollow-cylindrical shape.

5. Filter element according to claim 4, further comprising a support tube (21) in the interior space (22) on which the first traction surface (32) and the second traction surface (33) are provided.

6. Filter element according to one of the claims 1 to 4, comprising a first end disc (23) on a first longitudinal front face of the filter element (19) which features preferably a collar sleeve section extending at least along a longitudinal axis section into the interior space (22), wherein preferably the first traction surface (32) and the second traction surface (33) are provided at the collar sleeve section.

7. Filter element according to one of the claims 1 to 6, wherein a first insertion groove (34) and a second insertion groove (35) are provided between the first entrainment element (30) and the second entrainment element (31), wherein preferably the first insertion groove (34) and the second insertion groove (35) have a different width, and/or wherein preferably an angle (α) between the first insertion groove (34) and the second insertion groove (35) is different from 180°.

8. Filter element according to one of the claims 1 to 7, comprising a second end disc (27) provided on a second longitudinal front face opposite to the first end disc (23) in the longitudinal direction (L), wherein preferably an element of a sequential control, preferably an eccentric or coaxial sealing element extending axially in the longitudinal direction, is provided on the second end disc (27).

9. Filter arrangement (1), in particular oil filter arrangement, with a filter element (19) according to one of the claims 1 to 8 and a filter housing (2), wherein the filter housing (2) features the first counter-surface (53) and the second counter-surface (54), and wherein the first counter-surface (53) and the second counter-surface (54) are disposed along a longitudinal direction (L) of the filter housing (2) and spaced apart from each other, wherein the traction surfaces (32, 33) of the filter element (19) and the counter-surfaces (53, 54) of the filter housing (2) are configured to cooperate in such a way that the filter element (19) can be pulled out of the filter housing (2) with the aid thereof, and wherein the stop surface (39, 43) of the first entrainment element (30) and/or of the second entrainment element (31) of the filter element (19) is configured to cooperate in a usage arrangement with a corresponding counter stop surface of the filter housing (2) for realizing a relative rotational degree of freedom inhibition around the longitudinal axis (L) which is at least effective on one side with respect to the filter housing (2).

10. Filter arrangement according to claim 9, further comprising an entrainment device (18), in particular at a bypass valve housing, which is connected to a filter housing cover (4) of the filter housing (2), wherein the entrainment device (18) features a first entrainment counter element (51) featuring the first counter-surface (53), and a second entrainment counter element (52) featuring the second counter-surface (54).

11. Filter arrangement according to claim 10, wherein the first entrainment counter element (51) and the second entrainment counter element (52) have a different width, and/or wherein an angle (α) between the first entrainment counter element (51) and the second entrainment counter element (52) is different from 180°.

12. Filter arrangement according to claim 10 or 11, wherein the first entrainment counter element (51) features a first spring section (55) and the second entrainment counter element (52) a second spring section (56), wherein the first spring section (55) and the second spring section (56) are each configured to deform resiliently when a force (K) is applied to only one of the counter surfaces (53, 54) in such a way that the counter surface (53, 54) to which the force (K) is applied is tilted with respect to the longitudinal direction (L).

## Revendications

1. Élément filtrant (19), notamment élément de filtre à liquide, notamment élément de filtre à huile ou élément de filtre à carburant,
- avec un corps de milieu filtrant entourant au moins partiellement un espace intérieur (22),
- et avec une première surface de traction (32) qui est conçue pour interagir avec une première surface antagoniste (53) correspondante d'un boîtier de filtre (2), et une seconde surface de traction (33) qui est conçue pour interagir avec une seconde surface antagoniste (54) correspondante du boîtier de filtre (2),
- les surfaces de traction (32, 33) et les surfaces antagonistes (53, 54) étant conçues pour interagir de telle manière que l'élément filtrant (19) puisse être extrait du boîtier de filtre (2) à l'aide de celles-ci, et la première surface de traction (32) et la seconde surface de traction (33) étant espacées l'une de l'autre le long d'une direction longitudinale (L) de l'élément filtrant (19),
- l'élément filtrant (19) présentant un premier élément d'entraînement (30) qui présente la première surface de traction (32), et présentant un second élément d'entraînement (31) qui présente la seconde surface de traction (33), la première surface de traction (32) et la seconde surface de traction (33) faisant saillie radialement dans l'espace intérieur (22) de l'élément filtrant (19) entouré au moins partiellement et de manière circonférentielle par le corps de milieu filtrant,
- et le premier élément d'entraînement (30) et/ou le second élément d'entraînement (31) présentant une surface de butée (39, 43) adjacente sur la circonférence aux surfaces de traction (32, 33) du premier et/ou du second élément d'entraînement (30, 31) et qui est conçue pour interagir, dans un arrangement d'utilisation, avec une surface de contre-butée correspondante du boîtier de filtre (2) pour réaliser une inhibition du degré de liberté de rotation autour de l'axe longitudinal (L), efficace au moins d'un côté et relatif par rapport au boîtier de filtre (2).

2. Élément filtrant selon la revendication 1, la surface de butée (39, 43) étant orientée sensiblement de manière normale par rapport à la surface de traction (32, 33) et/ou faisant saillie radialement dans l'espace intérieur de préférence sensiblement de manière parallèle par rapport à un axe longitudinal de l'élément filtrant.

3. Élément filtrant selon la revendication 1 ou 2, la première surface de traction (32) et la seconde surface de traction (33) présentant chacune un plan qui est orienté respectivement de manière normale par rapport à la direction longitudinale (L).

4. Élément filtrant selon l'une quelconque des revendications 1 à 3, l'élément filtrant (19) étant un élément filtrant rond qui présente sensiblement une forme de cylindre creux.

5. Élément filtrant selon la revendication 4, comprenant en outre un tube de support (21) dans l'espace intérieur (22) sur lequel sont prévues la première surface de traction (32) et la seconde surface de traction (33).

6. Élément filtrant selon l'une quelconque des revendications 1 à 4, comprenant un premier disque d'extrémité (23) sur une première face frontale longitudinale de l'élément filtrant (19) qui présente de préférence une section de douille à collerette qui s'étend dans l'espace intérieur (22) au moins le long d'une section d'axe longitudinal, de préférence la première surface de traction (32) et la seconde surface de traction (33) étant disposées sur la section de douille à collerette.

7. Elément filtrant selon l'une quelconque des revendications 1 à 6, une première rainure d'insertion (34) et une seconde rainure d'insertion (35) étant prévues entre le premier élément d'entraînement (30) et le second élément d'entraînement (31), de préférence la première rainure d'insertion (34) et la seconde rainure d'insertion (35) étant de largeur différente, et/ou de préférence un angle (a) entre la première rainure d'insertion (34) et la seconde rainure d'insertion (35) étant différent de 180°.

8. Elément filtrant selon l'une quelconque des revendications 1 à 7, comprenant un second disque d'extrémité (27) disposé sur une seconde face frontale longitudinale orientée à l'opposé du premier disque d'extrémité (23) dans la direction longitudinale (L), de préférence un élément d'une commande séquentielle, de préférence un élément d'étanchéité excentrique ou coaxial s'étendant axialement dans la direction longitudinale, étant disposé de préférence sur le second disque d'extrémité (27).

9. Agencement de filtre (1), notamment agencement de filtre à huile, avec un élément filtrant (19) selon l'une quelconque des revendications 1 à 8 et un boîtier de filtre (2), le boîtier de filtre (2) présentant la première surface antagoniste (53) et la seconde surface antagoniste (54), et la première surface antagoniste (53) et la seconde surface antagoniste (54) étant espacées l'une de l'autre le long d'une direction longitudinale (L) du boîtier de filtre (2), les surfaces de traction (32, 33) de l'élément filtrant (19) et les surfaces antagonistes (53, 54) du boîtier de filtre (2) étant conçues pour interagir de telle manière que l'élément filtrant (19) puisse être extrait du boîtier de filtre (2) à l'aide de celles-ci, et la surface de butée (39, 43) du premier élément d'entraînement (30) et/ou du second élément d'entraînement (31) de l'élément filtrant (19) étant conçue pour interagir, dans une disposition d'utilisation, avec une surface de contre-butée correspondante du boîtier de filtre (2) pour réaliser une inhibition du degré de liberté de rotation autour de l'axe longitudinal (L), efficace au moins d'un côté et relatif par rapport au boîtier de filtre (2).

10. Agencement de filtre selon la revendication 9, comprenant en outre un dispositif d'entraînement (18), notamment sur un boîtier de la soupape de dérivation, qui est connecté à un couvercle d'un boîtier de filtre (4) du boîtier de filtre (2), le dispositif d'entraînement (18) comprenant un premier contre-élément d'entraînement (51) qui présente la première surface antagoniste (53), et un second dispositif d'entraînement (52) qui présente une seconde surface antagoniste (54).

11. Agencement de filtre selon la revendication 10, le premier contre-élément d'entraînement (51) et le second contre-élément d'entraînement (52) étant de largeurs différentes, et/ou un angle (a) entre le premier contre-élément d'entraînement (51) et le second contre-élément d'entraînement (52) est différent de 180°.

12. Agencement de filtre selon la revendication 10 ou 11, le premier contre-élément d'entraînement (51) présentant une première section à ressort (55) et le second contre-élément d'entraînement (52) une seconde section à ressort (56), la première section à ressort (55) et la seconde section à ressort (56) étant respectivement conçues pour se déformer élastiquement lorsqu'une force (K) est appliquée à une seule des surfaces antagonistes (53, 54), de sorte que la surface antagoniste (53, 54) soumise à la force (K) bascule par rapport à la direction longitudinale (L).
